# EUROPEAN PATENT SPECIFICATION

(11) **EP 2 399 950 B1**
(45) Date of publication and mention of the grant of the patent: **17.04.2013**
(21) Application number: 11181266.5
(22) Date of filing: 15.06.2005
(51) Int. Cl.: C08G 77/38, C08L 69/00, C08K 9/10

(54) **SILICONE IMPACT MODIFIER WITH HIGH REFRACTIVE INDEX AND METHOD FOR PREPARING THE SAME**
SILIKON-SCHLAGZÄHIGKEITSMODIFIKATOR MIT HOHEM BRECHUNGSINDEX UND HERSTELLUNGSVERFAHREN DAFÜR
AGENT ANTICHOC EN SILICONE À INDICE DE RÉFRACTION ÉLEVÉ ET SON PROCÉDÉ DE FABRICATION

(30) Priority: 31.12.2004 KR 20040117912
(43) Date of publication of application: 28.12.2011
(62) Divisional of application: 05750719.6
(73) Proprietor: Cheil Industries Inc., Gyeongsangbuk-do 730-710 (KR)
(72) Inventor: Han Su Lee, Uiwang-si Gyeonggi-do 437-711 (KR); Sung Sig Min, Seoul 157-040 (KR); Byung Choon Lee, Seoul 120-846 (KR); Byeong Do Lee, Yeosu-si, Jeollanam-do 555-803 (KR)
(74) Representative: Bublak, Wolfgang

(56) References cited:
- EP-A- 0 246 537
- EP-A- 0 307 963
- WO-A-00/34346
- US-A1- 2002 111 428

## Description

### Technical Field

The present invention relates to a silicone impact modifierwith high refractive index and method for preparing the same. More particularly, the present invention relates to a silicone impact modifier that comprises a rubber core consisting of an organosiloxane-alkylacrylate cross-linked copolymer and a plastic shell consisting of a vinyl (co)polymer and provides a thermoplastic resin with excellent coloration, impact resistance, heat stability and weather resistance.

### Background Art

In general, a polycarbonate resin has been used as an engineering plastic due to its excellence in impact strength, self-extinguish, dimension stability and heat resistance compared to other resins. Therefore, the resin has been widely applied to office automation (OA) instruments, electric or electronic goods and so on.

However, the polycarbonate resin has poor flowability due to its high melting point, so that the resin requires high processing temperature. Such high processing temperature causes a problem that the resultant molded product suffers from deterioration of impact resistance. For this reason, the polycarbonate resin is blended with various impact modifiers to improve impact resistance.

Although these impact modifiers improve impact strength of the polycarbonate resin, the use of such impact modifiers further causes problems. For instance, a butadiene rubber-based impact modifier commonly used in polycarbonate tends to be degraded or scorched during over 300 °C of molding process, which results in deterioration of heat stability and weather resistance, so the application has been restricted. In case of an acrylate rubber-based impact modifier, it may provide good heat stability and weather resistance, but the coloration property and impact resistance at low temperature are poor.

U.S. patent Nos. 4,994,522 and 5,132,359 disclose silicone impact modifiers for vinyl chloride resins. However, when these impact modifiers are used in polycarbonate resin, the coloration property is still deteriorated.

Accordingly, the present inventors have developed an impact modifier which provides a thermoplastic resin with excellent coloration, impact resistance, heat stability and weather resistance which is obtained by preparing a rubber core through cross-polymerization of an alkylacrylate in presence of an organosiloxane cross-linked (co)polymer having a specific particle size and a refractive index and graft (co)polymerizing a vinyl monomer onto the rubber core thereby forming a plastic shell. The refractive index of the impact modifier of the present invention is higher than the value of 1.45∼1.47 that of the conventional silicone impact modifier has.

### Disclosure of Invention

### Technical Problem

An object of the present invention is to provide an impact modifier that can improve a coloration property of polycarbonate resin without degradation of other intrinsic properties.

Another object of the present invention is to provide an impact modifier that can provide a polycarbonate with good heat stability, impact resistance at a low temperature and weather resistance.

Other objects and advantages of this invention will be apparent from the ensuing disclosure and appended claims.

### Technical Solution

The present invention relates to the silicone impact modifier that comprises (A) a rubber core consisting of (a₁) an organosiloxane cross-linked (co)polymer with a particle size of 50∼400 nm and (a₂) an alkylacrylate cross-linked copolymer; and (B) a plastic shell consisting of a vinyl (co)polymer, and the refractive indexof the silicone impact modifier is 1.49∼1.59.

### Best Mode for Carrying Out the Invention

(A) Rubber Core

In the present invention, the rubber core comprises (a₁) an organosiloxane cross-linked (co)polymer and (a₂) an alkylacrylate cross-linked copolymer.

The organosiloxane cross-linked (co)polymer has a refractive indexof 1.41~1.50 and a particle size of 50-400 nm. If the refractive index of organosiloxane cross-linked (co)polymer is less than 1.41, the refractive index of the impact modifier cannot reach the level of 1.49, and if the refractive indexof organosiloxane cross-linked (co)polymer is more than 1.50, the glass transition temperature of the organosiloxane polymer becomes higher, so that the affinity for the organic solvents is increased, which incurs deterioration of other properties. Therefore, the preferable range of the refractive index of organosiloxane cross-linked (co)polymer is 1.41-1.50, more preferably 1.41∼1.45 in view of physical property balance.

Further, if the particle size of the organosiloxane cross-linked (co)polymer is less than 50 nm or more than 400 nm, the impact modifying effect is reduced. So, it is preferable that the range of the particle size of the organosiloxane cross-linked (co)polymer is 50-400 nm.

The rubber core comprises the organosiloxane cross-linked (co)polymer and the alkylacrylate cross-linked polymer without any styrenic aromatic compound, and the refractive index of organosiloxane cross-linked (co)polymer is 1.44∼1.55

If the refractive indexof the organosiloxane cross-linked (co)polymer is less than 1.44, the refractive index of the impact modifier cannot reach the level of 1.49.

The organosiloxane cross-linked (co)polymer (a₁) of the present invention is the organosiloxane (co)polymer which has a cross-linked structure. Examples of the organosiloxane cross-linked (co)polymer include polydimethylsiloxane, polymethylphenylsiloxane, polydiphenylsiloxane, and so forth. By copolymerizing two or more kinds of organosiloxane monorner/oligomer, it is possible to adjust the refractive index of the organosiloxane cross-linked copolymer to 1.41-1.50. Preferably, the organosiloxane (co)polymer of the present invention is cross-linked. If the organosiloxane (co)polymer is not cross-linked, it undesirably loses rubber properties, which results in degradation of impact resistance, and the coloration property is also deteriorated due to the diffusion of organosiloxane (co)polymer into the surface of product.

Degree of crosslinking can be determined by solubility of the organosiloxane cross-linked (co)polymer in an organic solvent. The higher the degree of crosslinking, the lower the solubility in organic solvent. As the organic solvent, acetone or toluene may be used. Thus it is preferable to have an insoluble portion in toluene or acetone. The content of an insoluble portion of the organosiloxane cross-linked (co)polymer in toluene is preferably more than 30%.

Examples of the alkyl acrylate include methyl acrylate, ethyl acrylate, n-butyl acrylate and the like. Most preferable example is n-butyl acrylate, since it has a low glass transition temperature.

The weight ratio of (a₁) the organosiloxane cross-linked (co)polymer to (a₂) the alkylacrylate cross-linked copolymer is preferably 1 : 6∼6 : 1.

If the weight ratio of the organosiloxane cross-linked (co)polymer(a₁) to the alkylacrylate cross-linked copolymer(a₂) is less than 1 : 6, the impact modifying effect at low temperature is reduced, and if the weight ratio is more than 6 : 1, the content of organosiloxane cross-linked (co)polymer is relatively increased, which causes the affinity between resin and impact modifier to be decreased, so that the impact modifying effect is reduced and higher production cost is needed.

(B) Plastic Shell

The plastic shell of the present invention is a vinyl (co)polymer and is formed on the surface of the rubber core by graft (co)polymerizing a vinyl monomer onto the rubber core.

Examples of the vinyl monomer include alkylmethacrylate, acrylate and ethylenically unsaturated aromatic compound and so forth. For example, methylmethacylate, styrene, acrylonitrile or a mixture of two or more thereof is preferable.

In the present invention, the weight ratio of the rubber core(A) to the plastic shell (B) is 5:5∼9:1.

If the weight ratio of the rubber core (A) to the plastic shell (B) is less than 5 : 5, the rubber content is relatively reduced, so that the effect for the improvement of the impact strength becomes lowered. If the ratio is more than 9 : 1, the compatibility between resin and impact modifier is decreased, so that the impact modifying effect is also reduced and it causes higher production cost.

The impact modifier of the present invention has a refractive index within the range from 1.49 to 1.59, preferably from 1.50 to 1.57. If the refractive index is less than 1.49, the difference in refractive index between the impact modifier and the polycarbonate become increased, so that the coloration property is deteriorated.

The method of preparing the silicone impact modifier of the present invention will now be described in detail.

The method of preparing of the silicone impact modifier of the present invention comprises preparing a rubber core through cross-polymerization by adding an alkylacrylate to an organosiloxane cross-linked (co)polymer having a particle size of 50∼400 nm and a refractive indexof 1.44∼1.55; and graft (co)polymerizing a vinyl monomer onto the rubber core thereby forming a plastic shell.

In the present invention, the organosiloxane cross-linked (co)polymer is used in a dispersed state (called "silicone latex") prepared by dispersing the organosiloxane cross-linked (co)polymer into ion-exchanged water in the presence of an emulsifier.

The organosiloxane is selected from the group consisting of dimethylsiloxane, methylphenylsiloxane, diphenylsiloxane, and a mixture or a copolymer thereof. The organosiloxane cross-linked (co)polymer of the present invention is used in an amount of 5∼90 parts by weight, preferably 10∼50 parts by weight based on the total weight of reactants.

As the emulsifier, anionic emulsifier such as sodium, potassium, or ammonium salt of alkylsulfate containing from 4 to 30 carbon atoms can be used. Examples of the emulsifier include sodium dodecyl sulfate, sodium dodecylbenzene sulfate and the like. Among them, sodium dodecylbenzene sulfate is more preferable for its versatility in a wide range of pH. The emulsifier is used in an amount of 0.1-5 parts by weight, preferably 0.1-2 parts by weight based on the total weight of reactants.

Examples of the crosslinking agent include allyl methacrylate, triallyl cyanurate, triallyl isocyanurate, divinylbenzene and the like. Among them, allyl methacrylate and triallyl isocyanurate is preferred. The crosslinking agent is used in an amount of 0.1~10 parts by weight, preferably 0.1∼5 parts by weight based on the total weight of reactants.

As the polymerization initiator, free-radical initiators that generate free-radicals through thermal decomposition or oxidation-reduction reaction can be used. Suitable polymerization initiators comprise potassium persulfate, magnesium persulfate, benzoyl peroxide, hydrogen peroxide, dibenzyl peroxide, cumene hydroperoxide, *tert* - butyl hydroperoxide and the like. Among them, water-soluble initiator such as potassium persulfate is preferred. The polymerization initiator is used in an amount of 0.1∼5 parts by weight, preferably 0.1-2 parts by weight.

To the rubber core, a polymerization initiator and a vinyl monomer is added dropwise continuously at 50∼100 °C to form a plastic shell, followed by coagulation by means of the addition of a coagulating agent and filtration to prepare a silicone impact modifier with high refractive index.

Examples of the vinyl monomer include alkylmethacrylate, acrylate and ethylenically unsaturated aromatic compound and so forth. Among them, methylmethacylate, styrene, acrylonitrile or a mixture of two or more thereof is preferable. The vinyl monomer of the present invention is used in an amount of 5-90 parts by weight, preferably 10-50 parts by weight based on the total weight of reactants.

As the coagulating agent, metal salt such as magnesium chloride, calcium chloride, magnesium sulfate, calcium sulfate or the like can be used.

The impact modifier thus obtained has a high refractive indexof 1.49∼1.59. The impact modifier of the present invention can provide a thermoplastic resin with good heat stability, impact resistance even at low temperatures, weather resistance, and excellent coloration. The thermoplastic resin that can be used in the present invention is not particularly limited. Examples of the thermoplastic resin include a vinyl chloride resin, a styrenic resin, a styrene-acrylonitrile resin, an acrylic resin, a polyester resin, an ABS resin, a polycarbonate resin, and so forth. Especially, when the impact modifier of the present invention is used in polycarbonate resin for housings of electronic instrument, the effect is magnified.

When the thermoplastic resin is a polycarbonate resin, the silicone impact modifier of the present invention is blended into the composition in an amount of 0.5∼30 parts by weight, per 100 parts by weight of the polycarbonate resin.

The present invention may be better understood by reference to the following examples that are intended for the purpose of illustration and are not to be construed as in any way limiting the scope of the present invention, which is defined in the claims appended hereto.

### Mode for the Invention

**Examples**

**Example 1** (reference)

90g of dimethylsiloxane-diphenylsiloxane cross-linked copolymer having a refractive index of 1.43, a particle size of 170 nm and 65% of an insoluble portion in toluene and 1.4 g of sodium dodecylbenzene sulfate were dispersed into 760 g ion-exchanged water to obtain a silicone latex. To the silicone latex, 190 g of n-butylacrylate, 36 g of styrene and 9 g of triallyl isocyanurate were added and mixed at room temperature. To the mixture was added 1.8 g of potassium persulfate maintaining the temperature at 75 °C and the polymerization was carried out for 4 hours. And thereto was further added 0.7 g potassium persulfate followed by adding dropwise a mixed solution consisting of 101.25 g of styrene and 33.75 g of acrylonitrile for 15 minutes. After reacting for 4 hours at 75 °C, the system was cooled to room temperature. The conversion was 97.4%. The obtained latex was coagulated in a 1.5% aqueous MgSO₄ solution maintained at 75 °C, and then the coagulated latex was washed and dried to obtain an impact modifier in a powder form.

**Example 2** (reference)

112.5 g of dimethylsiloxane-diphenylsiloxane cross-linked copolymer having a refractive index of 1.45, a particle size of 210 nm and 60% of an insoluble portion in toluene and 2.7 g of sodium dodecylbenzene sulfate were dispersed into 980 g of ion-exchanged water to obtain a silicone latex. To the silicone latex, 112.5 g of n-butylacrylate, 90 g of styrene and 9 g of triallyl isocyanurate were added and mixed at room temperature. The subsequent procedure was conducted in the same manner as in Example 1 to obtain an impact modifier in a powder form. The conversion was 95.8%.

Example 3 (reference)

112.5 g of dimethylsiloxane-diphenylsiloxane cross-linked copolymer having a refractive index of 1.49, a particle size of 130 nm and 55% of an insoluble portion in toluene and 2.7 g of sodium dodecylbenzene sulfate were dispersed into 980 g of ion-exchanged water to obtain a silicone latex. To the silicone latex, 107.8 g of n-butylacrylate, 90 g of styrene and 4.7 g of allyl methacrylate were added and mixed at room temperature. The subsequent procedure was conducted in the same manner as in Example 1 to obtain an impact modifier in a powder form. The conversion was 95.2%.

**Example 4** (reference)

67.5 g of dimethylsiloxane cross-linked polymer having a refractive index of 1.41, a particle size of 250 nm and 68% of an insoluble portion in toluene and 3.2 g of sodium dodecylbenzene sulfate were dispersed into 980 g ion-exchanged water to obtain a silicone latex. To the silicone latex, 171 g of n-butylacrylate, 76.5 g of styrene and 4.5 g of allyl methacrylate were added and mixed at room temperature. To the mixture was added 1.8 g of potassium persulfate maintaining the temperature at 75 °C and the polymerization was carried out for 4 hours. And thereto was further added 0.68 g potassium persulfate followed by adding dropwise a mixed solution consisting of 49.5 g of styrene, 36 g of acrylonitrile and 49.5 g of methylmethacrylate for 15 minutes. The subsequent procedure was conducted in the same manner as in Example 1 to obtain an impact modifier in a powder form. The conversion was 95.2%.

**Comparative Example 1**

157.5 g of dimethylsiloxane cross-linked polymer having a refractive index of 1.41, a particle size of 300 nm and 69% of an insoluble portion in toluene and 3.15 g of sodium dodecylbenzene sulfate were dispersed into 976 g of ion-exchanged water to obtain a silicone latex. To the silicone latex, 153 g of n-butylacrylate and 4.5 g of allyl methacrylate were added and mixed at room temperature. The subsequent procedure was conducted in the same manner as in Example 1 to obtain an impact modifier in a powder form. The conversion was 97.6%.

**Comparative Example 2**

Metablen SRK-200(product name) manufactured by Mitsubishi Rayon Company of Japan was used as a silicone impact modifier.

**Comparative Example 3**

Comparative Example 3 was conducted in the same manner as in Example 1 except that 90 g of dimethylsiloxane-diphenylsiloxane linear copolymer having a refractive index of 1.43, a particle size of 220 nm and less than 5% of an insoluble portion in toluene was used instead of dimethylsiloxane-diphenylsiloxane cross-linked copolymer. The conversion was 94.6%.

The physical properties of the silicone impact modifiers obtained in the above Examples and Comparative Examples were measured as follow:

(1) Refractive Index: Using samples prepared by hot pressing the resulting impact modifier to the thickness of 1 mm, the refractive index was measured by using a light of laser wave length 632.8 mn by a prism coupler type laser refractometer (product name: SPA-4000) made by Sairon Tech. company.

(2) Coloration Property: The coloration property was evaluated using molded samples prepared by mixing polycarbonate, impact modifier and carbon black in proportion of 97 : 3 : 0.2 by observing it with naked eyes. Also, brightness (L*) of the molded sample was measured by means of a spectrophotometer (CM-3600d) manufactured by Konica Minota Company.

(3) Impact Resistance: Polycarbonate, impact modifier and carbon black were mixed in proportion of 97 : 3 : 0.2 and extruded through a twin screw extruder with Φ=45 mm in pellets. The pellets were dried at 110 °C over 3 hours and then molded using a 10 oz injection molding machine at 260∼330 °C and barrel temperature of 60∼100 °C into 1/8" Izod test bars and plate test specimens (thickness : 3 mm) respectively. The impact resistance was evaluated by Izod impact resistance test in accordance with ASTM D-256 and by falling ball impact test.

**Table 1**

| | Refractive Index | Coloration | | Izod Impact strength(Kgf·cm/cm) | | Falling Ball Impact Test Breakdown(%) | |
|---|---|---|---|---|---|---|---|
| | | L*,^{a)} | Eye test | 25°C | -30°C | | |
| Examples | 1 | 1.502 | 8 | good | 81 | 24 | 0 |
| | 2 | 1.530 | 6 | Very good | 75 | 21 | 0 |
| | 3 | 1.492 | 10 | good | 80 | 23 | 0 |
| | 4 | 1.497 | 10 | good | 83 | 22 | 0 |
| Comparative Examples | 1 | 1.472 | 19 | bad | 76 | 24 | 0 |
| | 2 | 1.475 | 20 | Very bad | 80 | 25 | 0 |
| | 3 | 1.500 | 12 | bad | 73 | 19 | 5 |

a) The lower the brightness(L*), the better the coloration property.

As shown above, the impact modifiers of Examples 1-4 show higher refractive index (more than 1.49) and better coloration property without deterioration of impact strength than those of Comparative Examples 1-2. In particular, the impact modifier of Comparative Example 3 which employs linear organosiloxane copolymer shows poor impact strength and bad coloration property even it has high refractive index of 1.500.

The present invention can be easily carried out by an ordinary skilled person in the art. Many modifications and changes may be deemed to be with the scope of the present invention as defined in the following claims.

## Claims

1. A silicone impact modifier comprising:
(A) a rubber core consisting of (a₁) an organosiloxane cross-linked (co)polymer with a particle size of 50∼400 nm and (a₂) an alkylacrylate cross-linked polymer; wherein the refractive index of said organosiloxane cross-linked(co)polymer (a₁) is 1.44∼1.55
and
(B) a plastic shell consisting of a vinyl (co)polymer; wherein the refractive index of the silicone impact modifier is 1.49∼1.59.

2. The silicone impact modifier as defined in claim 1, the weight ratio of (a₁) the organosiloxane cross-linked (co)polymer to (a₂) the alkylacrylate cross-linked copolymer is 1:6∼6:1.

3. The silicone impact modifier as defined in claim 1, the weight ratio of the rubber core (A) to the plastic shell (B) is 5:5∼9:1.

4. A method of preparing the silicone impact modifier comprising: preparing a rubber core through cross-polymerization by adding an alkylacrylate to an organosiloxane cross-linked(co)polymer having a particle size of 50∼400 nm; and graft (co)polymerizing a vinyl monomer onto the rubber core to form a plastic shell.

5. The method of preparing the silicone impact modifier as defined in claim 4, wherein said organosiloxane is selected from the group consisting of dimethylsiloxane, methylphenylsiloxane, diphenylsiloxane and a mixture or a copolymer thereof; said alkylacrylate is n-butylacrylate; said vinyl monomer is selected from the group consisting of methylmethacylate, styrene, acrylonitrile and a mixture thereof.

6. The method of preparing the silicone impact modifier as defined in claim 4, wherein said cross-polymerization is conducted by using allyl methacrylate or triallyl isocyanurate as a crosslinking agent.

7. The method of preparing the silicone impact modifier as defined in claim 4, wherein the amount of the organosiloxane cross-linked (co)polymer is 5∼90 parts by weight, the amount of the alkyl acrylate is 5∼90 parts by weight, and the amount of the vinyl monomer is 5∼90 parts by weight.

8. A thermoplastic resin composition comprising the silicone impact modifier of claim and a thermoplastic resin.

9. The thermoplastic resin composition as defined in claim 8, wherein said thermoplastic resin is selected from the group consisting of a vinyl chloride resin, a styrenic resin, a styrene-acrylonitrile resin, an acrylic resin, a polyester resin, an ABS resin and a polycarbonate resin.

10. The thermoplastic resin composition as defined in claim 9, wherein said thermoplastic resin is a polycarbonate resin, and the impact strength modifier is blended into the composition in an amount of 0.5∼30 parts by weight, per 100 parts by weight of the polycarbonate resin.

## Patentansprüche

1. Siliconschlagzähigkeitsmodifikator, umfassend:
(A) einen Kautschukkern, bestehend aus (a₁) einem mit Organosiloxan vernetzten (Co)Polymer mit einer Teilchengröße von 50-400 nm und (a₂) einem mit Alkylacrylat vernetzten Polymer; wobei der Brechungsindex des mit Organosiloxan vernetzten (Co)Polymers (a₁) 1,44∼1,55 beträgt,
und
(B) eine Kunststoffschale, bestehend aus einem Vinyl(co)polymer; wobei der Brechungsindex des Siliconschlagzähigkeitsmodifikators 1,49∼1,59 beträgt.

2. Siliconschlagzähigkeitsmodifikator nach Anspruch 1, wobei das Gewichtsverhältnis von (a₁) des mit Organosiloxan vernetzten (Co)Polymers zu (a₂) des mit Alkylacrylat vernetzten Copolymers 1:6∼6:1 beträgt

3. Siliconschlagzähigkeitsmodifikator nach Anspruch 1, wobei das Gewichtsverhältnis des Kautschukkerns (A) zur Kunststoffschale (B) 5:5∼9:1 beträgt.

4. Verfahren zur Herstellung des Siliconschlagzähigkeitsmodifikators, umfassend:
Herstellen eines Kautschukkerns durch Vernetzungspolymerisation durch Zugabe eines Alkylacrylats zu einem mit Organosiloxan vernetzten (Co)Polymer mit einer Teilchengröße von 50-400 nm; und Pfropf(co)polymerisieren eines Vinylmonomers auf den Kautschukkern unter Bildung einer Kunststoffschale.

5. Verfahren zur Herstellung des Siliconschlagzähigkeitsmodifikators nach Anspruch 4, wobei das Organosiloxan ausgewählt ist aus der Gruppe, bestehend aus Dimethylsiloxan, Methylphenylsiloxan, Diphenylsiloxan und einem Gemisch oder einem Copolymer davon; das Alkylacrylat n-Butylacrylat ist; das Vinylmonomer ausgewählt ist aus der Gruppe, bestehend aus Methylmethacrylat, Styrol, Acrylnitril und einem Gemisch davon.

6. Verfahren zur Herstellung des Siliconschlagzähigkeitsmodifikators nach Anspruch 4, wobei die Vernetzungspolymerisation unter Verwendung von Allylmethacrylat oder Triallylisocyanurat als Vernetzungsmittel durchgeführt wird.

7. Verfahren zur Herstellung des Siliconschlagzähigkeitsmodifikators nach Anspruch 4, wobei die Menge an mit Organosiloxanvernetztem (Co)Polymer 5-90 Gewichtsteile beträgt, die Menge an Alkylacrylat 5-90 Gewichtsteile beträgt und die Menge an Vinylmonomer 5∼90 Gewichtsteile beträgt.

8. Thermoplastische Harzzusammensetzung, umfassend den Siliconschlagzähigkeitsmodifikator nach Anspruch 1 und ein thermoplastisches Harz.

9. Thermoplastische Harzzusammensetzung nach Anspruch 8, wobei das thermoplastische Harz ausgewählt ist aus der Gruppe, bestehend aus einem Vinylchloridharz, einem Styrolharz, einem Styrol-Acrylnitril-Harz,. einem Acrylharz, einem Polyesterharz, einem ABS-Harz und einem Polycarbonatharz.

10. Thermoplastische Harzzusammensetzung nach Anspruch 9, wobei das thermoplastische Harz ein Polycarbonatharz ist und der Schlagzähigkeitsmodifikator in einer Menge von 0,5∼30 Gewichtsteile pro 100 Gewichtsteile des Polycarbonatharzes in die Zusammensetzung gemischt wird.

## Revendications

1. Modifiant choc siliconé, comprenant:
A) un noyau caoutchouteux constitué (a₁) d'un polymère ou copolymère de type polyorganosiloxane, réticulé, en particules de 50 à 400 nm de taille, (a₂) et d'un polymère d'acrylate d'alkyle, réticulé, lequel polymère ou copolymère de type polyorganosiloxane reticule (a₁) présente un indice de réfraction valant de 1,44 à 1,55;
et
B) une coque plastique constituée d'un polymère ou copolymère polyvinylique; lequel modifiant choc siliconé présente un indice de réfraction valant de 1,49 à 1,59.

2. Modifiant choc siliconé, conforme à la revendication 1, dans lequel le rapport pondéral du polymère ou copolymère de type polyorganosiloxane réticulé (a1) au polymère d'acrylate d'alkyle réticulé (a₂) vaut de 1/6 à 6/1.

3. Modifiant choc siliconé, conforme à la revendication 1, dans lequel le rapport pondéral du noyau caoutchouteux (A) à la coque plastique (B) vaut de 5/5 à 9/1.

4. Procédé de préparation d'un modifiant choc siliconé, comprenant les étapes suivantes: préparer un noyau caoutchouteux par polymérisation avec réticulation, en ajoutant un acrylate d'alkyle à un polymère ou copolymère de type polyorganosiloxane, réticulé, en particules de 50 à 400 nm de taille; et faire polymériser ou copolymériser un monomère vinylique, avec greffage sur ce noyau caoutchouteux, pour en faire une coque plastique.

5. Procédé de préparation d'un modifiant choc siliconé, conforme à la revendication 4, pour lequel ledit polyorganosiloxane est choisi dans l'ensemble formé par les poly(diméthyl-siloxane), poly(méthyl-phényl-siloxane) et poly(diphényl-siloxane), ainsi que leurs mélanges et leurs copolymères; ledit acrylate d'alkyle est de l'acrylate de butyle; et ledit monomère vinylique est choisi dans l'ensemble formé par les méthacrylate de méthyle, styrène et acrylonitrile et leurs mélanges.

6. Procédé de préparation d'un modifiant choc siliconé, conforme à la revendication 4, dans lequel on réalise ladite polymérisation avec réticulation en utilisant, comme agent de réticulation, du méthacrylate d'allyle ou de l'isocyanurate de triallyle.

7. Procédé de préparation d'un modifiant choc siliconé, conforme à la revendication 4, dans lequel on utilise le polymère ou copolymère de type polyorganosiloxane réticulé en une quantité de 5 à 90 parties en poids, l'acrylate d'alkyle en une quantité de 5 à 90 parties en poids, et le monomère vinylique en une quantité de 5 à 90 parties en poids.

8. Composition de résine thermoplastique comprenant un modifiant choc siliconé, conforme à la revendication 1, et une résine thermoplastique.

9. Composition de résine thermoplastique, conforme à la reven-dication 8, pour laquelle ladite résine thermoplastique est choisie dans l'ensemble constitué par une résine de type poly(chlorure de vinyle), une résine de type polystyrène, une résine de type poly(styrène/acrylonitrile), une résine polyacrylique, une résine de type polyester, une résine de type poly(acrylonitrile/butadiène/styrène) ou ABS, et une résine de type polycarbonate.

10. Composition de résine thermoplastique, conforme à la reven-dication 9, dans laquelle ladite résine thermoplastique est une résine de type polycarbonate, et le modifiant choc siliconé est incorporé dans la composition en une proportion de 0,5 à 30 parties en poids pour 100 parties en poids de résine de type polycarbonate.
